# EUROPÄISCHE PATENTSCHRIFT

(11) **EP 1 470 038 B1**
(45) Veröffentlichungstag und Bekanntmachung des Hinweises auf die Patenterteilung: **12.07.2017**
(21) Anmeldenummer: 03734652.5
(22) Anmeldetag: 31.01.2003
(51) Int. Cl.: B62J 6/20, B60B 1/00

(54) **SPEICHE UND VERFAHREN ZUM AUFBRINGEN EINER SELBSTKLEBENDEN FOLIE AUF EINE OBERFLÄCHE EINER SPEICHE**
SPOKE AND METHOD FOR APPLYING A SELF-ADHESIVE FILM TO A SURFACE OF A SPOKE
RAYON DE ROUE ET PROCEDE D'APPLICATION D'UNE PELLICULE AUTO-ADHESIVE SUR UNE SURFACE D'UN RAYON DE ROUE

(30) Priorität: 31.01.2002 DE 10203991
(43) Veröffentlichungstag der Anmeldung: 27.10.2004
(73) Patentinhaber: Büchel GmbH & Co. Fahrzeugteilefabrik KG, 26039 Fulda (DE)
(72) Erfinder: Zabrakes, Kathrin, 22559 Hamburg (DE)
(74) Vertreter: Patentanwälte Klickow & Partner Partnerschaftsgesellschaft mbB
(86) Internationale Anmeldenummer: PCT/DE2003/000281
(87) Internationale Veröffentlichungsnummer: WO 2003/064240

(56) Entgegenhaltungen:
- AU-A- 1 298 183
- CA-A1- 2 165 764
- CH-A5- 684 532
- DE-A1- 3 240 379
- US-A- 5 801 883
- PATENT ABSTRACTS OF JAPAN Bd. 2002, Nr. 12, 12. Dezember 2002 (2002-12-12) & JP 2002 229487 A (SEKI KUNIHARU), 14. August 2002 (2002-08-14)

## Beschreibung

Die Erfindung betrifft eine Speiche und ein Verfahren gemäss den Oberbegriffen der Ansprüche 1,2,11 und 12.

Im Rahmen zunehmender Verkehrsdichte vergrößert sich das Risiko von Fahrradfahrern, unbeschadet eine Fahrradfahrt beenden zu können. Insbesondere in der Dunkelheit werden Fahrradfahrer und deren Fahrräder von Autofahrern schlecht erkannt und leicht mit anderen Lichtquellen verwechselt.

Aus diesem Grunde besteht schon lange die Tendenz, Fahrradfahrer durch reflektierende oder nachleuchtende Teile des Fahrrades während der Dunkelheit kenntlich zu machen. Insbesondere wird versucht, spezifische Bewegungsvorgänge so zu verdeutlichen, dass sie insbesondere von einem Autofahrer eindeutig einem Fahrradfahrer zugeordnet werden können. Zu diesem Zwecke sind beispielsweise an den Pedalen reflektierende Flächen angeordnet worden, die sich dem von hinten dem Fahrradfahrer nähernden Autofahrer als auf- und abbewegliche Leuchtreflexe darstellen. Diese werden vom Autofahrer in richtiger Weise den Pedalbewegungen eines Fahrradfahrers zugeordnet.

Bisher waren jedoch Fahrradfahrer schlecht erkennbar, die quer zur Fahrtrichtung eines Autos fuhren, beispielsweise auf einer die Fahrtrichtung des Autos kreuzenden Straße. Zwar müßte ein sich quer zur Fahrtrichtung des Fahrradfahrers annähernder Kraftfahrer einen Lichtstrahl eines Scheinwerfers erkennen können, der am Fahrrad montiert sein soll. Abgesehen davon, dass in manchen Fällen der Scheinwerfer nicht zufriedenstellend funktioniert, ist jedoch der Scheinwerfer eine Lichtquelle, die nicht eindeutig einem sich bewegenden Fahrrad zugeordnet werden kann. Der Scheinwerfer ist typischen Bewegungen eines Fahrrades nicht zuordbar.

Zwar ist bereits der Vorschlag unterbreitet worden, Speichen und Felgen von Fahrrädern nachleuchtend bzw. reflektierend zu beschichten. Dabei wurde auch bereits vorgeschlagen, Speichen und Felgen mit reflektierenden Folien zu beschichten. Allerdings stellte sich heraus, dass die Folien nicht so haltbar mit den Speichen bzw. Felgen verbunden werden konnten, dass ein dauerhafter Rückstrahl bzw. Nachleuchteffekt entstand. Darüber hinaus waren auch die gesetzlichen Voraussetzungen nicht geschaffen, Speichen und Felgen mit einem reflektierenden bzw. nachleuchtenden Effekt zu versehen.

Aus der DE-A-44 02 201 ist es bereits bekannt, im Bereich von Speichen von Fahrrädern nachleuchtende folienartige Elemente zu verwenden. Ebenfalls ist es aus dieser Veröffentlichung grundsätzlich bekannt, Speichen reflektierend auszubilden.

In der CA-A-2 165 764 wird eine Fahrradfelge beschrieben, auf deren Speichen reflektierende Elemente aufgesetzt sind. Die Elemente bestehen aus einem Träger, der im Bereich seiner Oberfläche mit einer reflektierenden Folie beklebt ist und der auf die Speiche aufgeschoben wird. Eine ähnliche Konstruktion wird auch in der USA 5,804,883 beschrieben.

Aufgabe der vorliegenden Erfindung ist es daher, eine Speiche mit einem reflektierenden Effekt zu versehen, der dauerhaft mit der Speiche verbunden ist. Darüber hinaus besteht die Aufgabe der Erfindung darin, ein Verfahren anzugeben, mit dem eine Beschichtung von Speichen mit einer reflektierenden Folie vorgenommen werden kann.

Diese Aufgabe wird gemäß den Ansprüchen 1, 2, 11 und 12 gelöst.

Durch die Beklebung wird eine innige Verbindung zwischen der Oberfläche der Speiche und der Folie vorgenommen, die auch schwierigen Wetterbedingungen gewachsen ist. Darüber hinaus können Folien auf relativ billige Weise mit einer Klebeschicht versehen werden, die geeignet ist, gut auf einer Oberfläche einer Speiche zu haften.

Hinsichtlich des Verfahrens wird von der auf einer Rolle aufgewickelten Folie ein Streifen abgetrennt, von dem Streifen wird ein Ende einer den Kleber abdeckenden Schutzschicht entfernt, das mit unbedecktem Kleber versehenem Ende des Streifens wird auf der Oberfläche der Speiche angeklebt und die Schutzschicht wird vom Kleber abgezogen und während des Abziehens der Schutzschicht wird die vom Kleber beschichtete Seite der Folie mit der Oberfläche der Speiche verpreßt.

Durch dieses Verfahren kann mit einfachen technischen Mitteln eine dauerhafte Verbindung zwischen der nachleuchtenden bzw. reflektierenden Folie und der Speichenoberfläche hergestellt werden. Dadurch können serienmäßig hergestellte nachleuchtende bzw. reflektierende Folien zur Beschichtung von Speichenoberflächen Verwendung finden.

Gemäß einer Ausführungsform der Erfindung ist daran gedacht, einen Streifen von einer Rolle, auf der die Folie mit einer Breite von 8 mm und einer Länge von etwa 1.000 m bevorratet ist, abzuwickeln und abzutrennen. Ebenfalls ist es möglich, den Streifen fortlaufend von der Rolle abzuziehen.

Gemäß einer weiteren bevorzugten Ausführungsform der Erfindung ist die mit dem Kleber beschichtete Seite von einer vor einer verklebung zu beseitigenden Schutzschicht abgedeckt. Diese Schutzschicht verhindert eine Beeinträchtigung der Klebkraft des Klebers. Dieser bleibt im Besitze seiner vollen Klebkraft, so daß die Folie fest mit der Speiche verbunden werden kann. Eine Beeinträchtigung der Klebkraft beispielsweise durch Beschmutzung des Klebers oder dessen Beschädigung ist ausgeschlossen.

Gemäß einer weiteren bevorzugten Ausführungsform der Erfindung ist die Schutzschicht als eine zusammenhängende Abdeckbeschichtung ausgebildet, die beim Abziehen den Kleber auf der mit ihm beschichteten Seite der Folie beläßt. Diese Abdeckbeschichtung ist sorgfältig auf die Qualität des Klebers abgestellt, so daß gewährleistet ist, daß beim Abziehen der Abdeckbeschichtung der Kleber auf der mit der Speiche zu beklebenden Seite der Folie verbleibt. Auf diese Weise steht der Kleber für eine feste Verklebung der Folie mit der Speichenoberfläche zur Verfügung.

Gemäß einer weiteren bevorzugten Ausführungsform der Erfindung besitzt die Folie eine sich der zu bewickelnden Oberfläche eng anschmiegende Konsistenz. Diese ist so gewählt, daß trotz des kleinen Querschnitts einer Speiche eine faltenfreie Beklebung der Oberfläche erfolgen kann. Dabei müssen relativ geringe Kräfte aufgewendet werden, so daß auch eine schnelle Arbeitsweise beim Bekleben der Oberfläche möglich ist.

Gemäß einer weiteren bevorzugten Ausführungsform der Erfindung besitzt die mit der Beschichtung versehene Folie eine Dicke von höchstens 0,25 mm, bevorzugt höchstens 0,1 mm. Eine derartig dünne Folie paßt sich dem Querschnitt einer Speiche in besonders guter Weise an und verhindert, daß Zonen einer schlechten Verklebung entstehen, in die Schmutz eindringen kann, der eine Ablösung der Folie von der
Speiche begünstigt.

Gemäß einer weiteren bevorzugten Ausführungsform der Erfindung weist die mit der Beschichtung versehene Folie eine Elastizität von mindestens 5 bis 50%, bevorzugt 5 bis 25 % auf. Eine derartig elastische Folie begünstigt ein problemloses Anschmiegen der Folie an die Speichenoberfläche, so daß durch die der gedehnten Folie innewohnenden Rückstellkräfte eine optimale Anpassung der Folie an die Oberfläche gewährleistet ist.

Gemäß der Erfindung ist die ungedehnte Folie als ein Streifen ausgebildet, dessen Breite schmaler als der Umfang der Speiche ist. Auf diese Weise kann die Folie beim Aufbringen einer Vordehnung so auf die Oberfläche einer Speiche geklebt werden, daß benachbarte Ränder sich einander berühren, sich jedoch nicht überlappen. Auf diese Weise wird verhindert, daß unterhalb der aufgeklebten Folie kleinste Freiräume entstehen, in die sich Feuchtigkeit aus der Umgebung hineinziehen kann.

Gemäß einer weiteren bevorzugten Ausführungsform der Erfindung ist die Beschichtung mit einer Schutzbeschichtung versehen. Diese Schutzbeschichtung verhindert eine Beschädigung der Beschichtung durch mechanische Beanspruchungen. Die Folie kann daher mit Hilfe von maschinellen Bearbeitungsvorgängen auf die Oberfläche der Speiche aufgebracht werden, ohne daß eine Verletzung der Beschichtung, die den reflektierenden bzw. rückstrahlenden Effekt zeigt, eintreten kann.

Gemäß einer weiteren bevorzugten Ausführungsform der Erfindung ist die Schutzbeschichtung von der beschichteten Seite der Folie abziehbar. Durch diese Art der Verbindung zwischen der Schutzbeschichtung und der von ihr geschützten Beschichtung kann die Schutzbeschichtung einfach und schnell von der Beschichtung abgelöst werden, ohne daß diese durch die sich ablösende Schutzbeschichtung Schaden leidet. Vielmehr ist durch die Art der Schutzbeschichtung gewährleistet, daß die Folie ihre reflektierenden bzw. nachleuchtenden Effekte in vollem Umfange besitzt, nachdem die Schutzbeschichtung von der Beschichtung abgelöst worden ist.

Gemäß einer weiteren bevorzugten Ausführungsform der Erfindung weist die Schutzbeschichtung eine ein Knicken der beschichteten Folie verhindernde Konsistenz auf. Dadurch erhält die Schutzbeschichtung eine die Beschichtung stützende Eigenschaft, so daß Knickbeschädigungen der Beschichtung nicht auftreten können. Diese müssen vermieden werden, da durch Knicke in der Beschichtung feine Haarrisse entstehen können, durch die Wasser in die Beschichtung eindringen kann. Durch diese Wassereinbrüche ist eine Ablösung der Beschichtung von der Folie zu erwarten.

Gemäß einer weiteren bevorzugten Ausführungsform der Erfindung weist die Schutzbeschichtung eine Dicke von mindestens 0,15 mm, bevorzugt 0,05 mm auf. Eine derartig dicke Beschichtung ist in der Lage, mechanische Beschädigungen von der Schutzbeschichtung fern zu halten.

Gemäß einer weiteren bevorzugten Ausführungsform der Erfindung haftet der Kleber nach Aufbringen der Folie auf die Oberfläche der Speiche fester als die Schutzbeschichtung auf der Beschichtung. Durch diese Auswahl der einzelnen Klebverbindungen und Schichtstoffe ist gewährleistet, daß die Folie gut mit der Speiche verklebt werden kann. Selbst bei der Ablösung der Schutzbeschichtung muß nicht befürchtet werden, daß sich der Kleber von der Oberfläche der Speiche löst und damit die Folie schlecht auf der Oberfläche der Speiche haftet und ihren reflektierenden Eigenschaften nicht gerecht werden kann.

Gemäß einer weiteren bevorzugten Ausführungsform der Erfindung ist die Schutzbeschichtung als eine zusammenhängende Schicht ausgebildet, die beim Abziehen die Beschichtung auf der Folie beläßt. Die Beschichtung haftet also fester auf der Folie als die Schutzschicht auf der Beschichtung. Trotzdem wird die Schutzbeschichtung ihrer Aufgabe gerecht, die Beschichtung vor mechanischen Beschädigungen zu schützen.

Hinsichtlich des Verfahrens ist vorgesehen, daß von der auf eine Rolle aufgewickelten Folie ein Streifen abgetrennt wird, daß von dem Streifen ein Ende einer den Kleber abdeckenden Schutzschicht entfernt wird, daß das mit unbedecktem Kleber versehene Ende des Streifens auf der Oberfläche der Speiche angeklebt und die Schutzschicht vom Kleber abgezogen wird und daß während des Abziehens der Schutzschicht die vom Kleber beschichtete Seite der Folie mit der Oberfläche der Speiche verpreßt wird. Durch dieses Anheften der selbstklebenden Folie im Bereich eines der beiden Enden eines Streifens erhält der Streifen bezüglich der Speiche eine eindeutige Richtung. Ferner wird der Streifen in einer bestimmten Lage gehalten, so daß ein gezieltes Ablösen der Schutzschicht vom Kleber möglich ist. Diese Ablösung geschieht unmittelbar vor dem Anpressen des Klebers auf die Oberfläche der Speiche, so daß eine Beeinträchtigung der Klebkraft des Klebers jedenfalls verhindert wird.

Gemäß einer Ausführungsform der Erfindung wird der Streifen mit einem Untermaß von der Rolle abgetrennt und bei Aufbringen auf die Oberfläche der Speiche gereckt und unter Spannung mit der Oberfläche der Speiche beklebt. Durch diese Bemessung des Streifens wird erreicht, daß die Enden des Streifens einander unmittelbar benachbart sind, wenn der Streifen auf die Speiche aufgebracht ist. Ein Überlappen der Enden wird vermieden. Andererseits wird durch das Vorrekken des Streifens in diesem eine Rückstellkraft erzeugt, die geeignet ist, den Streifen fest um die Speiche zu spannen, so daß der Streifen fest auf die Oberfläche der Speiche gedrückt wird. Die Entstehung von Falten wird auf diese Weise vermieden.

Gemäß einer Ausführungsform der Erfindung wird der Streifen von seinem mit der Oberfläche verklebten Ende beginnend in Form einer Spirale um die Speiche geführt, dabei die Schutzschicht abgezogen und der Kleber mit der Oberfläche der Speiche verklebt. Auf diese Weise kann ein gleichbleibender Zug auf den Streifen während des Aufbringens auf die Oberfläche der Speiche ausgeübt werden. Eine großflächige Beaufschlagung des Streifens mit der Gefahr, daß dadurch Falten innerhalb des Streifens entstehen, wird dadurch vermieden.

Gemäß einer Ausführungsform der Erfindung wird die Speiche in Längsrichtung an einer den Streifen in Richtung auf die Oberfläche der Speiche führenden Einmündungsstelle vorbeigeführt und dabei der Streifen mit seinem Kleber auf die Oberfläche der Speiche gepreßt und außerdem wird die Speiche während ihrer Bewegung in ihrer Längsrichtung um ihre Längsachse gedreht. Auf diese Weise wird die Spiralführung des Streifens dadurch herbeigeführt, daß die Speiche in bestimmter Weise bewegt wird. Diese Speichenbewegungen können auf relativ einfache Weise gesteuert werden, so daß eine nahtlose Beschichtung der Oberfläche mit der Folie erreicht werden kann.

Gemäß einer Ausführungsform der Erfindung werden die Bewegungen der Speiche in Längsrichtung einerseits und um ihre Längsachse andererseits so auf einander abgestimmt, daß die Speiche in Form einer schwach ansteigenden Spirale gewickelt wird. Die Steuerung dieser Bewegungsvorgänge ist relativ einfach, so daß je nach Verwendung bestimmter Folienarten und Speichen mit bestimmten Oberflächenbeschaffenheiten die Bewegungen der Speiche den jeweiligen Verhältnissen angepaßt werden kann.

Gemäß einer Ausführungsform der Erfindung wird von dem mit seinem einen Ende auf der Oberfläche der Speiche verklebten Streifen eine Schutzbeschichtung von einer dem Kleber gegenüberliegenden Seite des Streifens abgezogen. Diese Abwicklung der Schutzbeschichtung kann unmittelbar im Bereich der Übergabestelle erfolgen, so daß eine gute Führung der Abwickelvorrichtung zur Aufnahme der Schutzbeschichtung möglich ist.

Gemäß einer Ausführungsform wird die Schutzbeschichtung von einer reflektierenden und/oder nachleuchtenden Beschichtung der Folie abgezogen. Durch richtige Wahl der Schutzbeschichtung wird gewährleistet, daß die reflektierende und/oder nachleuchtende Beschichtung der Folie beim Abziehen der Schutzbeschichtung keinen Schaden leidet.

Gemäß einer Ausführungsform der Erfindung werden die Speichen vor Aufbringung der Folie mit einer fettlösenden Reinigungsflüssigkeit gewaschen. Dadurch wird erreicht, daß der auf der Rückseite der Folie vorgesehene Kleber gut mit der gereinigten Oberfläche der Speichen abbindet.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

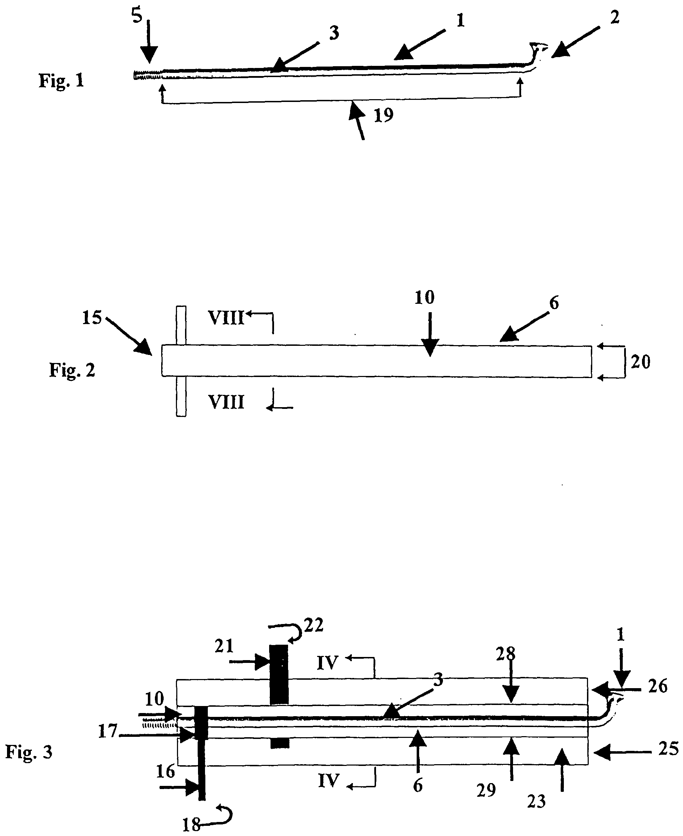

- Fig. 1:: Eine Seitenansicht der Speiche,
- Fig. 2:: eine Draufsicht auf einen Streifen,
- Fig. 3:: eine Draufsicht auf eine aufgeklappte Form mit eingelegtem Streifen und eingelegter Speiche,

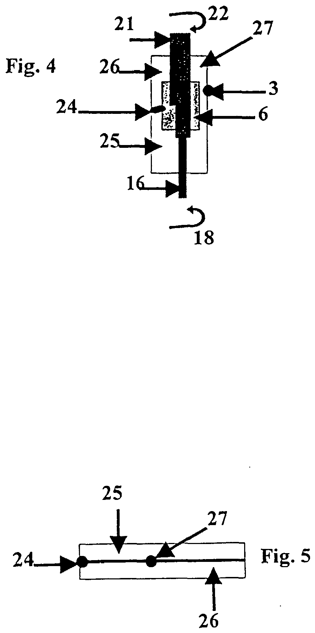

- Fig. 4:: einen Querschnitt durch eine aufgeklappte Form entsprechend der Schnittlinie IV-IV in Fig. 3,
- Fig.: 5:einen Querschnitt durch eine zugeklappte Form,

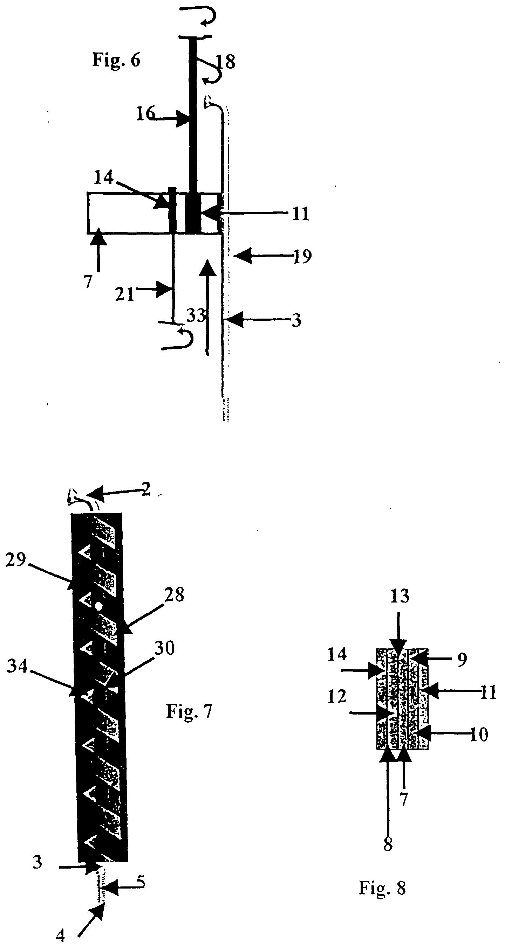

- Fig. 6:: eine schematische Darstellung einer Wickelvorrichtung zum spiralförmigen Bewickeln einer Speiche,
- Fig. 7:: eine spiralförmig bewickelte Speiche und
- Fig. 8:: einen Querschnitt durch einen Streifen entlang der Schnittlinie VIII-VIII in Fig. 2.

Eine Speiche (1) besteht im Wesentlichen aus einem Speichenkopf (2), einem Speichenschaft (3) sowie einem Speichenende (4), in das ein Gewinde (5) eingeprägt ist.

Der Speichenkopf (2) ragt durch eine Öffnung einer nicht dargestellten Nabe eines ebenfalls nicht dargestellten Rades hindurch und wird mit dem Speichenende (4) in einer die Nabe umgebenden Felge verschraubt. Dabei werden die Speichen (1) so angeordnet, daß die Felge die Nabe konzentrisch umgibt.

Auf dem Speichenschaft (3) wird ein Streifen (6) einer Folie (7) mit Hilfe eines auf einer der beiden Oberflächen (8,9) aufgebrachten Klebers (10) befestigt. Der Kleber (10) ist mit einer Schutzschicht (11) abgedeckt, die eine Beschädigung des Klebers (10) beispielsweise durch Beschmutzung oder Abtragung verhindert.

Auf der dem Kleber (10) gegenüber liegenden Oberfläche (8) der Folie (7) ist eine Beschichtung (12) vorgesehen, die aus einem reflektierenden Material besteht. Diese Beschichtung (12) ist auf ihrer der Folie (7) abgewandten Oberfläche (13) mit einer Schutzbeschichtung (14) abgedeckt, die die Oberfläche (13) großflächig völlig abdeckt und deren Beschädigung verhindert. Die Schutzbeschichtung (14) besteht aus einer zusammenhängenden Schicht, die in ihrer Gesamtheit von der Oberfläche (13) abgezogen werden kann. Sie ist als eine relativ steife Schicht ausgebildet, die gegen mechanische Beschädigung sehr widerstandsfähig ist.

Zur Befestigung des Streifens (6) auf dem Speichenschaft (3) wird zunächst an einem Ende (15) des Streifens (6) die Schutzschicht (11) vom Kleber (10) abgezogen. Zu diesem Zwecke kann beispielsweise die Schutzschicht (11) mit ihrem Ende (15) um einen Windenstab (16) gewickelt werden, der zum Abziehen der Schutzschicht (11) in einer Drehrichtung (18) um seine eigene Achse verdrillt wird. Dadurch zieht sich die Schutzschicht (11) von dem Kleber (10) ab, so daß dieser im unmittelbaren Kontakt mit einer Oberfläche (19) des Speichenschaftes (3) kommt und an diesem fest haftet. Dadurch erhält der Streifen (6) im Bereich des Endes (17) durch Andrücken des ungeschützten Klebers (10) einen Halt, so daß durch weiteres Aufwickeln des Windenstabes (16) die gesamte Schutzschicht (11) vom Kleber (10) abgezogen werden kann. Nunmehr kann der Streifen (6) mit fortlaufendem Abziehen der Schutzschicht (11) vom Kleber (10) auf seiner gesamten Breite (20) um den Speichenschaft (3) geschlungen und mit diesem verklebt werden.

Gleichzeitig wird mit zunehmendem Abwickeln der Schutzschicht (11) auch die Schutzbeschichtung (14) von der Oberfläche (13) der Beschichtung (12) mit Hilfe einer Walze (21) abgezogen. Diese Walze (21) hat einen größeren Querschnitt als der Windenstab (16), da die Beschichtung (12) aus einem widerstandsfähigeren Material als die Schutzschicht (11) besteht. Diese kann daher auf einen mit einem kleinen Durchmesser versehenen Windenstab (16) nicht aufgewickelt werden. Durch Verdrehen der Walze (21) um ihre eigene Achse in Drehrichtung (22) wird die Schutzbeschichtung (14) auf die Walze (21} übernommen. Auf diese Weise behält die Oberfläche (13) der Beschichtung (12) den gewünschten reflektierenden Effekt.

Nach Entfernung der Schutzbeschichtung (14) kann der Streifen (6) ohne Schwierigkeiten um den Speichenschaft (3) herumgeschlungen Werden, so daß der Streifen (6) fest auf der Oberfläche (19) des Speichenschaftes (3) haftet, da die Folie (7) eine sich der zu bewickelnden Oberfläche (19) anschmiegende Konsistenz besitzt. Diese vermittelt dem Streifen (6) eine feste Anlage im Speichenschaft (3), nachdem die Schutzbeschichtung (14) entfernt worden ist. Beim Entfernen der Schutzbeschichtung (14) bleibt die Beschichtung (12) fest auf der Oberfläche (13) der Folie (7) haften. Ebenso ist dafür gesorgt, daß der Kleber (10) so fest auf der Oberfläche (19) des Speichenschaftes (3) haftet, daß beim Abziehen der Schutzbeschichtung (14) mit Hilfe der Walze (21) die Haftung des Klebers (10) auf der Oberfläche (19) des Speichenschaftes (3) nicht gelöst wird.

Die Folie (7) besitzt Stoffeigenschaften, die geeignet sind, eine feste Verbindung mit der Oberfläche (19) des Speichenschaftes (3) herzustellen. Dazu gehört in erster Linie eine gute Flexibilität der Folie (7).

Diese besitzt einschließlich der Beschichtung (12) eine Dicke von nicht mehr als 0,25 mm. Im Hinblick auf diese dünne Folie (7) und der auf ihr haftenden Beschichtung (12) kann die Folie (7) sehr eng auf den Speichenschaft (3) aufgewickelt werden, so daß eine faltenlose Verbindung mit dem Speichenschaft (3) zustande kommt. Durch diese faltenlose Auftragung der Folie (7) und ihrer Beschichtung (12) wird erreicht, daß die Beschichtung (12) einen optimalen Reflexions effekt entwickeln kann.

Darüber hinaus weist die Folie (7) mit der Beschichtung (12) eine Elastizität von mindestens 5 bis 50% auf. Diese hohe Elastizität der mit der Beschichtung (12) versehenen Folie (7) ermöglicht eine feste Verbindung des Klebers (10) mit der Oberfläche (19) des Speichenschaftes (3).Dabei wird die Folie (7) beim Aufbringen auf die Oberfläche (19) sowohl in Längsrichtung als auch quer zur Längsrichtung je nach Qualität der Folie (7) mehr oder minder stark vorgespannt. Nachdem die Folie (7) unter dieser Vorspannung mit der Oberfläche (19) verbunden worden ist, wirken sich die von der Folie (7) erzeugten und in dieser vorhandenen Rückstellkräfte als Anpreßkräfte aus, durch die die Folie (7) auf die Oberfläche (19) gepreßt wird. Auf diese Weise wirken sich die in die Folie (7) eingeleiteten Kräfte als Unterstützung für eine makellose Verbindung der Folie (7) mit der Oberfläche (19) aus.

Die mit der Beschichtung (12) versehene Folie (7) wird von ihrem Hersteller in Form einer Rolle angeliefert. Die Rolle besitzt eine Breite, die so bemessen ist, daß sie im vorgereckten Zustand den Speichenschaft (3) gerade umschließen kann, so daß die beiden Längskanten eines von der Folie abgetrennten Streifens (6) nach dem Verkleben mit der Oberfläche (19) stumpf aneinander stoßen. Zu diesem Zwecke wird die Breite der Folie so bemessen, daß sie schmaler ist als der Umfang der Speiche (1).Dadurch ist gewährleistet, daß nach Aufbringen einer vorberechneten Vorspannung die Längskanten eines von der Folie (7) abgetrennten Streifens (6) unmittelbar aneinander stoßen. Je größer die Elastizität der Folie ist, um so schmaler sind die zum Aufkleben auf die Oberfläche (19) vorgesehenen Streifen (6) ausgebildet.

Die Schutzbeschichtung (14) kann von der Beschichtung (12) abgezogen werden, ohne daß die Beschichtung (12) sich von der Folie (7) löst. Darüber hinaus ist die Verbindung des Klebers (10) mit der Oberfläche (19) des Speichenschaftes (3) so ausgebildet, daß beim Abziehen der Schutzbeschichtung (14) von der Beschichtung (12) eine Ablösung des Klebers (10) von der Oberfläche (19) verhindert wird.

Vor Aufbringung der Folie (7) auf die Speiche (1) wird die Speiche in einer fettlösenden Reinigungsflüssigkeit gewaschen. Dieser Waschvorgang wird so gesteuert, daß an seinem Ende jegliche Fettreste von der Oberfläche (19) des Speichenschaftes abgelöst sind. Sodann wird zur Aufbringung der mit der Beschichtung (12) versehenen Folie ( 7 ) auf die Oberfläche ( 19) des Speichenschaftes (3) zunächst am Ende (15) des Streifens (6) die Schutzschicht (11) vom Kleber (10) entfernt und der Kleber (10) an einer dafür vorgesehenen Stelle der Oberfläche (19) mit dieser verklebt. Dadurch erhält der Streifen (6) eine bezüglich der Speiche (1) vorgegebene Ausrichtung. Sodann wird die Schutzschicht (11) in Längsrichtung des Streifens (6) von diesem abgezogen und der Streifen (6) gegen den Speichenschaft (3) gedrückt. Gleichzeitig wird die Schutzbeschichtung (14) von der Beschichtung (12) abgezogen, so daß die mit der Beschichtung (12) versehene Folie (7) die zum Bekleben der Oberfläche (19) notwendige Elastizität erhält. Nunmehr kann die Folie (7) mit der Oberfläche (19) verpreßt werden, so daß sie faltenlos auf der Oberfläche (19) haftet.

Das Verpressen kann in einer Form (23) erfolgen, die aus zwei um ein Gelenk (24) gegeneinander verschwenkbaren Formhälften (25,26) besteht. In den beiden Formhälften (25,26) ist eine Vertiefung (27) vorgesehen, in die der Streifen (6) eingelegt werden kann. Dabei verläuft der Streifen (6) je zur Hälfte in einer der beiden Formhälften (25,26).

Sodann wird die Speiche (1) mit der Oberfläche (19) ihres Speichenschaftes (3) leicht angewinkelt und in dieser Lage auf den Kleber (10) aufgelegt, von dem inzwischen das Ende (17) der Schutzschicht (11) abgezogen worden ist. Auf diese Weise kommt eine punktuelle Verklebung der Oberfläche (19) mit dem Kleber zustande, so daß der für die Verklebung der Speiche (1) entscheidende Ausgangspunkt vorgegeben ist. Nunmehr kann die Schutzschicht (11) von dem Kleber (10) abgezogen werden, beispielsweise durch Aufwickeln durch den Windenstab (16). Dabei senkt sich die Speiche (1) weiter in Richtung auf den Kleber (10) ab, so daß schließlich auf der gesamten Länge des Speichenschaftes (3) eine Verklebung des Streifens (6) zustande kommt. Gleichzeitig wird durch Aufwickelbewegungen in Drehrichtung (22) die Schutzbeschichtung (14) auf die Walze (21) aufgewikkelt.

Nachdem die Verklebung der Speiche (1) und das Abziehen der Schutzbeschichtung (14) auf der gesamten Länge des Streifens (6) vorgenommen worden ist, werden die beiden Formhälften (25,26) um das Gelenk (24) verschwenkt. Beim Verschwenken wird der Streifen (6) um den Speichenschaft (3) gepreßt, so daß der Streifen (6) auf seiner gesamten Länge mit dem Speichenschaft (3) verklebt wird. Durch das Verschwenken wird der Streifen (6), der in der Vertiefung (23) fest geführt ist, leicht vorgereckt, so daß der Streifen (6) mit seinen einander parallel verlaufenden Längskanten (28,29) auf der Oberfläche (19) des Speichenschaftes (3) stumpf aneinander stößt. Gleichzeitig wird von der Form (23) auf den Streifen (6) eine Kraft ausgeübt, die geeignet ist, den Kleber (10) fest auf den Speichenschaft (3) zu drücken und damit eine gute Verklebung des Streifens (6) mit der Oberfläche (19) des Speichenschaftes (3) herbeizuführen.

Die Folie (7) kann jedoch auch in Form einer Spirale (30) auf den Speichenschaft (3) aufgewickelt werden. Zu diesem Zwecke wird die Folie (7) von einer nicht dargestellten Folienrolle zu eine Übergangsstelle (31) geführt. Im Bereich der Übergangsstelle (1) wird eine Schutzschicht (11) von dem Kleber (13) der Folie (7) abgezogen und ein mit dem unbedeckten Kleber (10) versehenes Ende (32) mit der Oberfläche (19) des Speichenschafts (3) verklebt. Die von der Folie (7) abgelöste Schutzschicht (1) wird auf einem Windenstab (16) aufgewickelt, der in Drehrichtung (18) um seine eigene Achse gedreht wird. Dabei haftet die von der Folie (7) abgelöste Schutzschicht (11) auf dem Windenstab (16) an und wird auf diesen aufgewickelt. Der Windenstab (16) besitzt eine Wickelgeschwindigkeit, die ausreichend bemessen ist, um bei einer vorgegebenen Umwicklungsgeschwindigkeit der Folie (7) die Schutzschicht (11) so rechtzeitig von der Folie (7) abzuziehen, daß der Kleber auf der Oberfläche (19) des Speichenschaftes zur Anlage kommt. Um eine makellose Verklebung der Folie (7) auf der Oberfläche (19) herbeiführen zu können, wird die Folie (7) nach dem Anheften ihres Endes (32) auf der Oberfläche (19) des Speichenschaftes (3) mit einer geringen Zugkraft zurückgehalten, während die Speiche (1) einerseits um ihre Längsachse gedreht und andererseits in Richtung (33) ihrer Längsachse gefördert wird. Dabei wird die Folie (7) auf die Oberfläche (19) des Speichenschaftes (3) in Form der Spirale (30) aufgewickelt. Durch die Einleitung gewisser Rückhaltekräfte wird in der Folie (7) eine Spannung erzeugt, die dazu führt, daß die Folie stramm auf die Oberfläche (19) aufgewickelt wird.

Entsprechend der Geschwindigkeit, mit der die Folie (7) auf die Oberfläche (19) aufgewickelt wird, wird der Windenstab (16) in Drehrichtung (18) gedreht, so daß sich jeweils der von der Schutzschicht (11) entblößte Kleber (10) auf der Oberfläche anschmiegt und mit dieser verpreßt wird. Entsprechend wird auch mit Hilfe der Walze (21) die Schutzbeschichtung (14) von der Beschichtung (12) der Folie (7) abgewickelt.

Durch eine entsprechende Abstimmung der Wickelgeschwindigkeit, mit der die Folie (7) auf die Oberfläche (19) aufgebracht wird, mit der Längsverschiebung der Speiche (1) in Richtung (33) ihrer Längsachse wird auf der Oberfläche (19) die Spirale (30) mit einer mehr oder minder großen Steigerung ausgebildet. Dabei stoßen einander benachbarte Längskanten (28,29) zweier benachbarter Windungen stumpf aneinander. Auf diese Weise wird eine glatte Oberfläche (34) mit einem sich über die gesamte Länge des Speichenschaftes (3) erstreckenden reflektierenden Effekt erzeugt.

Die Folie (1) kann beispielsweise einen derartigen Aufbau besitzen, daß auf eine erste Abdeckfolie mit einer Dicke im Bereich von 0,08 bis 0,1 mm ein Kleber aufgetragen ist. Die Abdeckfolie kann beispielsweise aus einem Polyester ausgebildet sein. Auf dem Kleber ist eine Trägerschicht angeordnet. Die Trägerschicht kann beispielsweise aus Papier ausgebildet oder als eine Folie aus Kunststoff realisiert sein. Auf den Träger erfolgt ein weiterer Auftrag eines Klebers, mit dem Glaskugeln fixiert werden. Die Glaskugeln haben bevorzugt einen Durchmesser von weniger als einem Millimeter, bevorzugt von weniger als 100 µm und weisen Luftblasen auf. Insbesondere ist an einen Kugeldurchmesser von weniger als 10 µm gedacht. Die Glaskugeln sind teilweise im Bereich ihrer äußeren Oberfläche verspiegelt. Hierzu kann beispielsweise Aluminium verwendet werden. Insbesondere ist daran gedacht, nach einer Anordnung der Glaskugeln im Bereich des Klebers pulverförmiges Aluminium aufzustreuen.

Auf die Glaskugeln wird eine weitere Abdeckschicht aufgetragen, die aus Papier oder Kunststoff ausgebildet sein kann. Für diese Abdeckschicht erweist sich eine Dicke im Bereich von 0,15 mm als zweckmäßig. Vor einem Anbringen der Folie im Bereich des Speichenschaftes (3) erfolgt ein Ablösen der beiden Abdeckfolien. Als Dicke für die Tragschicht erweist sich eine Dimensionierung von etwa 0,25 mm als zweckmäßig.

## Patentansprüche

1. Speiche (1) zur Verbindung einer Radnabe mit einer Radfelge, wobei die Oberfläche (19) der Speiche (1) mit einer Folie (7) beklebt ist und wobei die Folie (7) auf ihrer der Oberfläche (19) abgewandten Seite mit einer reflektierenden Beschichtung (12) versehen ist, und bei der die ungedehnte Folie (7) als ein Streifen (6) ausgebildet ist und bei der der Streifen (6) auf seiner gesamten Länge mit einem Speichenschaft (3) verklebt ist, **dadurch gekennzeichnet, dass** die Folie (7) im Bereich ihrer der Speiche (1) abgewandten Oberfläche eine Vielzahl von Glaskugeln aufweist, dass der Streifen (6) eine Breite schmaler als der Umfang der Speiche (1) aufweist und dass der Streifen (6) gereckt und unter Spannung auf der Oberfläche (19) der Speiche (1) angeordnet ist, wobei die Folie (7) eine Vorspannung quer zu ihrer Längsrichtung aufweist, sodass benachbarte Ränder sich einander berühren, sich jedoch nicht überlappen.

2. Speiche (1) zur Verbindung einer Radnabe mit einer Radfelge, wobei die Oberfläche (19) der Speiche (1) mit einer Folie (7) beklebt ist und wobei die Folie (7) auf ihrer der Oberfläche (19) abgewandten Seite mit einer reflektierenden Beschichtung (12) versehen ist, sowie bei der die ungedehnte Folie (7) als ein Streifen (6) ausgebildet ist und bei der der Streifen (6) auf seiner gesamten Länge mit einem Speichenschaft (3) verklebt ist, **dadurch gekennzeichnet, dass** die Folie (7) im Bereich ihrer der Speiche (1) abgewandten Oberfläche eine Vielzahl von Glaskugeln aufweist und dass der Streifen (6) zur Erzeugung einer Spannung in Längsrichtung gereckt und unter dieser Spannung auf der Oberfläche (19) der Speiche (1) angeordnet ist und bei der die Folie (7) in Form einer Spirale angeordnet ist.

3. Speiche nach Anspruch 1 oder 2, **dadurch gekennzeichnet, dass** die Folie (7) auf ihrer der Beschichtung (12) abgewandten Seite mit einem Kleber (10) beschichtet ist, der auf der Oberfläche (19) fest haftet.

4. Speiche nach einem der Ansprüche 1 bis 3, **dadurch gekennzeichnet, dass** die mit der Beschichtung (12) versehene Folie (7) eine Dicke von höchstens 0,25 mm aufweist.

5. Speiche nach einem der Ansprüche 1 bis 4, **dadurch gekennzeichnet, dass** die mit der Beschichtung (12) versehene Folie (7) eine Elastizität von mindestens 5 bis 50% aufweist.

6. Speiche nach einem der Ansprüche 1 bis 5, **dadurch gekennzeichnet, dass** die Beschichtung (12) mit einer Schutzbeschichtung (14) versehen ist.

7. Speiche nach einem der Ansprüche 1 bis 6, **dadurch gekennzeichnet, dass** eine Schutzbeschichtung (14) von der Beschichtung (12) der Folie (7) abziehbar ist.

8. Speiche nach Anspruch 6 oder 7, **dadurch gekennzeichnet, dass** die Schutzbeschichtung (14) eine das Einknicken der beschichteten Folie (7) verhindernde Konsistenz aufweist.

9. Speiche nach Anspruch 8, **dadurch gekennzeichnet, dass** die Schutzbeschichtung (14) eine Dicke von mindestens 0,15 mm aufweist.

10. Speiche nach einem der Ansprüche 6 bis 9, **dadurch gekennzeichnet, dass** die Schutzbeschichtung (14) als eine zusammenhängende Schicht ausgebildet ist, die beim Abziehen die Beschichtung (12) auf der Folie (7) beläßt.

11. Verfahren zum Aufbringen einer selbstklebenden Folie (7) mit einer reflektierenden Beschichtung auf die Oberfläche einer Speiche (1), **dadurch gekennzeichnet, dass** die Beschichtung durch eine Vielzahl von Glaskugeln bereitgestellt ist, dass von der auf einer Rolle aufgewickelten Folie ein Streifen (6) abgetrennt wird, dass von dem Streifen (6) ein Ende einer den Kleber (10) abdeckenden Schutzschicht (11) entfernt wird, dass das mit dem unbedeckten Kleber (10) versehene Ende des Streifens (6) auf der Oberfläche (19) der Speiche (1) angeklebt und die Schutzschicht (11) vom Kleber (10) abgezogen wird und dass während des Abziehens der Schutzschicht (11) die vom Kleber (10) beschichtete Seite der Folie (7) mit der Oberfläche (19) der Speiche (1) verpresst wird, und dass die ungedehnte Folie (7) als ein Streifen (6) ausgebildet ist, dessen Breite schmaler als der Umfang der Speiche (1) ist, wobei der Streifen (6) auf seiner gesamten Länge mit einem Speichenschaft (3) verklebt wird, wobei benachbarte Ränder einander berühren, jedoch nicht überlappen und dass die Folie (7) mit einer Vorspannung quer zu ihrer Längsrichtung versehen wird.

12. Verfahren zum Aufbringen einer selbstklebenden Folie (7) mit einer reflektierenden Beschichtung auf die Oberfläche einer Speiche (1), **dadurch gekennzeichnet, dass** die Beschichtung durch eine Vielzahl von Glaskugeln bereitgestellt ist, dass von der auf einer Rolle aufgewickelten Folie ein Streifen (6) abgetrennt wird, dass von dem Streifen (6) ein Ende einer den Kleber (10) abdeckenden Schutzschicht (11) entfernt wird, dass das mit dem unbedeckten Kleber (10) versehene Ende des Streifens (6) auf der Oberfläche (19) der Speiche (1) angeklebt und die Schutzschicht (11) vom Kleber (10) abgezogen wird und dass während des Abziehens der Schutzschicht (11) die vom Kleber (10) beschichtete Seite der Folie (7) zur Erzeugung einer Spannung in Längsrichtung gereckt und unter dieser Spannung mit der Oberfläche (19) der Speiche (1) verpresst wird, und dass die ungedehnte Folie (7) als ein Streifen (6) ausgebildet ist, wobei der Streifen (6) auf seiner gesamten Länge mit einem Speichenschaft (3) verklebt wird und dass die Folie (7) in Form einer Spirale auf der Speiche (1) angeordnet wird.

13. Verfahren nach Anspruch 11 oder 12, **dadurch gekennzeichnet, dass** der Streifen (6) auf seiner dem Kleber (10) abgewandten Seite in eine aufgeklappte Form (23) hineingelegt wird, die Speiche (1) auf die mit dem Kleber (10) versehene Fläche des Streifens (6) abgesenkt und dabei die Schutzschicht (11) vom Kleber (10) entfernt wird und anschließend die Form (23) geschlossen und dabei der Streifen (6) auf die Oberfläche (19) der Speiche (1) gedrückt wird.

14. Verfahren nach einem der Ansprüche 11 bis 13, **dadurch gekennzeichnet, dass** die Speiche (1) in Längsrichtung an einer den Streifen (6) in Richtung auf die Oberfläche (19) der Speiche (1) führenden Übergangsstelle (31) vorbeigeführt und dabei der Streifen (6) mit seinem Kleber (10) auf die Oberfläche (19) der Speiche (1) gepreßt wird und die Speiche (1) während ihrer Bewegung in ihrer Längsrichtung um ihre Längsachse gedreht wird.

15. Verfahren nach einem der Ansprüche 11 bis 14, **dadurch gekennzeichnet, dass** die Schutzbeschichtung (14) von der reflektierenden und/oder nachleuchtenden Beschichtung (12) der Folie (7) abgezogen wird.

## Claims

1. Spoke (1) for connecting a wheel hub to a wheel rim, wherein the surface (19) of the spoke (1) is glued to a film (7) and wherein the film (7) is provided with a reflective coating (12) on its side facing away from the surface (19), and the unstretched film (7) is provided in the form of a strip (6) and the strip (6) is adhered to a spoke shaft (3) across its entire length, **characterised in that** in the region of its surface facing away from the spoke (1), the film (7) has a plurality of glass spheres, the strip (6) has a width that is narrower than the circumference of the spoke (1) and the strip (6) is stretched and applied to the surface (19) of the spoke (1) under tension, and a pre-tensioning of the film (7) transversely to its longitudinal direction is such that adjacent edges are in contact with one another but do not overlap.

2. Spoke (1) for connecting a wheel hub to a wheel rim, wherein the surface (19) of the spoke (1) is glued to a film (7) and wherein the film (7) is provided with a reflective coating (12) on its side facing away from the surface (19), and the unstretched film (7) is provided in the form of a strip (6) and the strip (6) is adhered to a spoke shaft (3) across its entire length, **characterised in that** in the region of its surface facing away from the spoke (1), the film (7) has a plurality of glass spheres and the strip (6) is stretched in order to create a tension in the longitudinal direction and is applied to the surface (19) of the spoke (1) under this tension and the film (7) is applied in the shape of a spiral.

3. Spoke as claimed in claim 1 or 2, **characterised in that** on its side facing away from the coating (12), the film (7) is coated with an adhesive (10) which firmly adheres to the surface (19).

4. Spoke as claimed in one of claims 1 to 3, **characterised in that** the film (7) provided with the coating (12) has a thickness of at most 0.25 mm.

5. Spoke as claimed in one of claims 1 to 4, **characterised in that** the film (7) provided with the coating (12) has an elasticity of at least 5 to 50%.

6. Spoke as claimed in one of claims 1 to 5, **characterised in that** the coating (12) is provided with a protective coating (14).

7. Spoke as claimed in one of claims 1 to 6, **characterised in that** a protective coating (14) can be pulled off the coating (12) of the film (7).

8. Spoke as claimed in claim 6 or 7, **characterised in that** the protective coating (14) has a consistency which prevents the coated film (7) from wrinkling.

9. Spoke as claimed in claim 8, **characterised in that** the protective coating (14) has a thickness of at least 0.15 mm.

10. Spoke as claimed in one of claims 6 to 9, **characterised in that** the protective coating (14) is provided in the form of a cohesive layer which comes away from the coating (12) of the film (7) when pulled off.

11. Method for applying a self-adhesive film (7) having a reflective coating to the surface of a spoke (1), **characterised in that** the coating is provided in the form of a plurality of glass spheres, a strip (6) is separated from the film wound on a roller, an end of a protective layer (11) covering the adhesive (10) is removed from the strip (6), the end of the strip (6) provided with the uncovered adhesive (10) is adhered to the surface (19) of the spoke (1) and the protective layer (11) is pulled off the adhesive (10) and, as the protective layer (11) is being pulled off, the side of the film (7) coated with the adhesive (10) is pressed onto the surface (19) of the spoke (1), and the unstretched film (7) is provided in the form of a strip (6), the width of which is narrower than the circumference of the spoke (1), and the strip is adhered to a spoke shaft (3) across its entire length and adjacent edges are in contact with one another but do not overlap, and a pre-tensioning is imparted to the film (7) transversely to its longitudinal direction.

12. Method for applying a self-adhesive film (7) having a reflective coating to the surface of a spoke (1), **characterised in that** the coating is provided in the form of a plurality of glass spheres, a strip (6) is separated from the film wound on a roller, an end of a protective layer (11) covering the adhesive (10) is removed from the strip (6), the end of the strip (6) provided with the uncovered adhesive (10) is adhered to the surface (19) of the spoke (1) and the protective layer (11) is pulled off the adhesive (10) and, as the protective layer (11) is being pulled off, the side of the film (7) coated with the adhesive (10) is stretched to create a tension in the longitudinal direction and pressed onto the surface (19) of the spoke (1) under this tension, and the unstretched film (7) is provided in the form of a strip (6), and the strip (6) is adhered to a spoke shaft (3) across its entire length and the film (7) is applied to the spoke (1) in the shape of a spiral.

13. Method as claimed in claim 11 or 12, **characterised in that** the strip (6) is placed in an open mould (23) by its side facing away from the adhesive (10), the spoke (1) is lowered onto the surface of the strip (6) provided with the adhesive (10) and the protective layer (11) removed from the adhesive (10) at the same time, after which the mould (23) is closed so that the strip (6) is pressed onto the surface (19) of the spoke (1).

14. Method as claimed in one of claims 11 to 13, **characterised in that** the spoke (1) is fed in the longitudinal direction past a transfer point (31) guiding the strip (6) in the direction towards the surface (19) of the spoke (1) and the strip (6) is thus pressed onto the surface (19) of the spoke (1) by its adhesive (10) and the spoke (1) is rotated about its longitudinal axis as it moves in its longitudinal direction.

15. Method as claimed in one of claims 11 to 14, **characterised in that** the protective coating (14) is pulled off the reflective and/or luminescent coating (12) of the film (7).

## Revendications

1. Rayon de roue (1), destiné à relier un moyeu de roue à une jante de roue, sachant que, sur la surface (19) du rayon de roue (1) est collée une pellicule (7) et sachant que la pellicule (7) est pourvue, sur sa face opposée à la surface (19), d'un revêtement réfléchissant (12), et que la pellicule (7) non étirée présente la forme d'une bande (6), et que la bande (6) est collée sur toute sa longueur sur une tige de rayon de roue (3),
**caractérisé en ce que** la pellicule (7) présente, dans la section de sa face opposée au rayon de roue (1), une pluralité de billes de verre, que la bande (6) est dotée d'une largeur plus étroite que le périmètre du rayon de roue (1) et que la bande (6) étirée et sous contrainte est appliquée sur la surface (19) du rayon de roue (1), sachant que la pellicule (7) présente une précontrainte transversale par rapport au sens de sa longueur, de sorte que des bords voisins se touchent, mais ne se chevauchent cependant pas.

2. Rayon de roue (1), destiné à relier un moyeu de roue à une jante de roue, sachant que, sur la surface (19) du rayon de roue (1) est collée une pellicule (7) et sachant que la pellicule (7) est pourvue, sur sa face opposée à la surface (19), d'un revêtement réfléchissant (12), et que la pellicule (7) non étirée présente la forme d'une bande (6), et que la bande (6) est collée sur toute sa longueur sur une tige de rayon de roue (3),
**caractérisé en ce que** la pellicule (7) présente, dans la section de sa face opposée au rayon de roue (1), une pluralité de billes de verre et que la bande (6) est tendue dans le sens de sa longueur pour générer une contrainte et est appliquée, sous cette contrainte, sur la surface (19) du rayon de roue (1), et que la pellicule (7) est agencée à la manière d'une spirale.

3. Rayon de roue selon revendication 1 ou 2,
**caractérisé en ce que** la pellicule (7) est collée fixement, par sa face opposée au revêtement (12), sur la surface (19), au moyen d'un adhésif (10).

4. Rayon de roue selon l'une des revendications 1 à 3,
**caractérisé en ce que** la pellicule (7) pourvue du revêtement (12) présente une épaisseur de 0,25 mm au maximum.

5. Rayon de roue selon l'une des revendications 1 à 4,
**caractérisé en ce que** la pellicule (7) pourvue du revêtement (12) présente une élasticité d'au moins 5 à 50 %.

6. Rayon de roue selon l'une des revendications 1 à 5,
**caractérisé en ce que** le revêtement (12) est pourvu d'une couche de protection (14).

7. Rayon de roue selon l'une des revendications 1 à 6,
**caractérisé en ce que** la couche de protection (14) peut être enlevée du revêtement (12) de la pellicule (7).

8. Rayon de roue selon revendication 6 ou 7,
**caractérisé en ce que** la couche de protection (14) présente une consistance qui empêche le fléchissement de la pellicule (7) revêtue.

9. Rayon de roue selon la revendication 8,
**caractérisé en ce que** la couche de protection (14) présente une épaisseur d'au moins 0,15 mm.

10. Rayon de roue selon l'une des revendications 6 à 9,
**caractérisé en ce que** la couche de protection (14) est réalisée sous la forme d'une couche cohérente, qui, après avoir été enlevée, laisse le revêtement (12) sur la pellicule (7).

11. Procédé pour l'application d'une pellicule (7) auto-adhésive, dotée d'un revêtement réfléchissant, sur la surface d'un rayon de roue (1),
**caractérisé en ce que** le revêtement est réalisé par une pluralité de billes de verre, qu'une bande (6) est séparée d'une pellicule enroulée sur une bobine, qu'une extrémité d'une couche de protection (11), qui recouvre l'adhésif (10), est enlevée de la bande (6), que l'extrémité de la bande (6), pourvue de l'adhésif (10) non recouvert, est collée sur la surface (19) du rayon de roue (1), et que la couche de protection (11) étant enlevée de l'adhésif (10), et que, pendant l'enlèvement de la couche de protection (11), la face de la pellicule (7), pourvue de l'adhésif (10), est pressée avec la surface (19) du rayon de roue (1), et que la pellicule (7) non étirée présente la forme d'une bande (6), dont la largeur est plus étroite que le périmètre du rayon de roue (1), sachant que la bande (6) est collée sur toute sa longueur sur une tige de rayon de roue (3), sachant que des bords voisins se touchent, mais ne se chevauchent cependant pas et que la pellicule (7) est sous une précontrainte transversale par rapport au sens de sa longueur.

12. Procédé pour l'application d'une pellicule (7) auto-adhésive, dotée d'un revêtement réfléchissant, sur la surface d'un rayon de roue (1),
**caractérisé en ce que** le revêtement est réalisé par une pluralité de boules de verre, qu'une bande (6) est séparée d'une pellicule enroulée sur une bobine, qu'une extrémité d'une couche de protection (11), qui recouvre l'adhésif (10), est enlevée de la bande (6), que l'extrémité de la bande (6), pourvue de l'adhésif non recouvert (10), est collée sur la surface (19) du rayon de roue (1), et la couche de protection (11) étant enlevée de l'adhésif (10), et que, pendant l'enlèvement de la couche de protection (11), la face de la pellicule (7), pourvue de l'adhésif (10), est compressée avec le rayon de roue (1) et étirée pour générer une tension dans la direction longitudinale et que la pellicule (7) non étirée présente la forme d'une 6ésente la forme d'une bande (6), sachant que la bande (6) est collée sur toute sa longueur avec une tige de rayon de roue (3) et que la pellicule (7) est agencée sur le rayon de roue (1) à la manière d'une spirale.

13. Procédé selon revendication 11 ou 12,
**caractérisé en ce que** la bande (6) est placée sur sa face opposée à l'adhésif (10) dans un moule ouvert (23), que le rayon de roue (1) est abaissé sur la face de la bande (6) pourvue de l'adhésif (10), et que, ce faisant, la couche de protection (11) est enlevée de l'adhésif (10) et que le moule (23) est ensuite fermé et, que, ce faisant, la bande (6) est pressée sur la surface (19) du rayon de roue (1).

14. Procédé selon l'une des revendications 11 à 13,
**caractérisé en ce que** le rayon de roue (1) passe, dans la direction longitudinale, devant une zone de transition (31), conduisant la bande (6) vers la surface (19) du rayon de roue (1) et que, ce faisant, la bande (6) est pressée avec son adhésif (10) sur la surface (19) du rayon de roue (1) et le rayon de roue (1), pendant son déplacement dans le sens de sa longueur, étant tourné autour de son axe longitudinal.

15. Procédé selon l'une des revendications 11 à 14,
**caractérisé en ce que** la couche de protection (14) est enlevée du revêtement (12) réfléchissant et / ou post luminescent de la pellicule (7).
